# EUROPEAN PATENT SPECIFICATION

(11) **EP 3 781 299 B1**
(45) Date of publication and mention of the grant of the patent: **03.09.2025**
(21) Application number: 19717133.3
(22) Date of filing: 15.02.2019
(51) Int. Cl.: B01J 16/00, B01J 19/24, C01B 3/06

(54) **A HYDROGEN REACTOR WITH CATALYST IN FLOW CONDUIT**
WASSERSTOFFREAKTOR MIT KATALYSATOR IN EINEM STRÖMUNGSKANAL
RÉACTEUR À HYDROGÈNE AVEC CATALYSEUR DANS UN CONDUIT D'ÉCOULEMENT

(30) Priority: 17.04.2018 US 201862658635 P; 27.08.2018 US 201862723331 P
(43) Date of publication of application: 24.02.2021
(73) Proprietor: Electriq-Global Energy Solutions Ltd., 3902638 Tirat Carmel (IL)
(72) Inventor: ZILBERMAN, Alexander, Haifa (IL); FUTERMAN, Roman, Nesher (IL); NEVO-MICHROWSKI, Guy, Kadima Tzoran (IL)
(74) Representative: Finnegan Europe LLP
(86) International application number: PCT/IB2019/000156
(87) International publication number: WO 2019/202382

(56) References cited:
- CN-Y- 201 154 897
- US-A1- 2007 172 403
- US-A1- 2009 110 974
- US-A1- 2010 150 824
- DATABASE WPI Week 200876, Derwent World Patents Index; AN 2008-M82324, XP002791723

## Description

### CROSS REFERENCE TO RELATED APPLICATIONS

This application claims the benefit of U.S. Provisional Application No. 62/658,635, filed on April 17, 2018, and U.S. Provisional Application No. 62/723,331 filed on August 27, 2018.

### TECHNICAL FIELD

The presently disclosed systems may be used to obtain hydrogen from a hydrogen liquid carrier. In particular, the presently disclosed systems may be configured for obtaining hydrogen from a hydrogen liquid carrier upon flowing the hydrogen liquid carrier through catalyst equipped flow conduit.

### BACKGROUND

With the limited supply of fossil fuels and their adverse effect on the climate and the environment, it has become a global priority to seek alternate sources of energy that are clean, abundant, and sustainable. While sources such as solar, wind, and hydrogen can meet the world's energy demand, considerable challenges remain to find materials that can store and/or convert energy efficiently.

Efficient hydrogen generation from a hydrogen liquid carrier is a key enabling technology for the advancement of hydrogen and fuel cell technologies in applications including stationary power, portable power, and transportation. Hydrogen has the highest energy per mass of any fuel. Its low ambient temperature density, however, results in a low energy per unit volume, therefore requiring the development of advanced storage methods that have the potential for higher energy density. Hydrogen is considered to be an ideal fuel for the transportation industry. However, considerable challenges related to hydrogen generation from a hydrogen liquid carrier still need to be addressed in order to use hydrogen for transportation purposes.

At ambient conditions, hydrogen is a volatile gas. One kg of hydrogen occupies 11.2 m³ (~100g/m³ ) - a volume that may be impractically large for certain hydrogen-based energy applications. One goal in hydrogen utilization, therefore, is the reduction of hydrogen volume, either by compression, liquefaction, adsorption to high surface area materials, or embedding in solid compounds. Solid state hydrogen storage may result in the highest hydrogen volumetric densities, exceeding a volumetric density of liquid hydrogen, for example, by more than a factor of two. Other challenges from the materials perspective may include combined volumetric and gravimetric hydrogen density that may be required for use in the transportation industry (e.g., 5.5 mass % H₂ and 40 kgH₂ /m³, respectively), suitable thermodynamic stability for the working temperature (e.g., - 40 to 85°C), and sufficiently fast reaction kinetics to allow rapid hydrogen uptake and delivery (e.g., refueling of 5 kg of H₂ in few minutes).

Metal hydrides, such as metal borohydrides, may offer a hydrogen storage medium. Metal borohydrides may be dissolved in a liquid, such as water, resulting in a hydrogen liquid carrier. Metal borohydrides may be capable of storing hydrogen at targets levels of 7.5 wt % H₂ and 70g of H₂ per liter of the liquid carrier. Under appropriate temperature and pressure conditions, metal borohydrides may release hydrogen that can be used as a fuel (e.g., for a fuel cell).

Efficiently releasing hydrogen from such a liquid carrier and/or gaining access to most or all of the hydrogen stored in a liquid carrier, however, may present certain challenges. Thus, there is a need to develop solutions for the efficient production of hydrogen from a hydrogen liquid carrier resulting in a spent carrier containing a low concentration of hydrogen.

US 2009/110974 A1 discloses a fuel cell system including a fuel cell stack for generating electric energy by an electrochemical reaction of hydrogen and oxygen; a hydride tank for storing a liquid hydride; a liquid catalyst tank for storing a liquid catalyst for promoting a hydrogen gas generation reaction from the liquid hydride; a reaction flow channel for promoting laminar flow of the liquid hydride and the liquid catalyst; and a hydrogen separator for storing the hydrogen gas generated from the reaction flow channel and transferring the hydrogen gas to the fuel cell stack.

### SUMMARY

Consistent with a disclosed embodiment, a reaction chamber for generating hydrogen gas is provided. The reaction chamber for generating hydrogen gas using a hydrogen liquid carrier line includes a channel including a catalyst for causing the hydrogen gas to be produced from the hydrogen liquid carrier, the channel including an inlet end for the hydrogen liquid carrier, an outlet end for a spent carrier, and at least one mixing element to enchance mixing of the hydrogen liquid carrier. The reaction chamber also includes a valve for controlling a rate of flow of the hydrogen liquid carrier flowing through the channel, a gas outlet for evacuating the hydrogen gas generated in the channel, and at least one processor configured to receive at least one signal from a power consuming system indicating a demand for the hydrogen gas, and to control the valve to adjust the rate of flow of the hydrogen liquid carrier to meet the demand for the hydrogen gas.

The foregoing general description and the following detailed description are exemplary and explanatory only and are not restrictive of the claims.

### BRIEF DESCRIPTION OF THE DRAWINGS

The accompanying drawings are not necessarily to scale or exhaustive. Instead, the emphasis is generally placed upon illustrating the principles of the inventions described herein. These drawings, which are incorporated in and constitute a part of this specification, illustrate several embodiments consistent with the disclosure and, together with the detailed description, serve to explain the principles of the disclosure. In the drawings:
Fig. 1 is an illustrative system for hydrogen generation consistent with disclosed embodiments.
Fig. 2 is an illustrative cross-sectional view of a system for hydrogen generation consistent with disclosed embodiments.
Fig. 3 is another illustrative cross-sectional view of a system for hydrogen generation consistent with disclosed embodiments.
Figs. 4-6 are illustrative cross-sectional views of a reaction chamber for hydrogen generation consistent with disclosed embodiments.
Fig. 7 is an illustrative view of a reaction chamber for hydrogen generation with a mixing element consistent with disclosed embodiments.
Fig. 8 is an illustrative view of a reaction chamber for hydrogen generation with multiple inlets consistent with disclosed embodiments.
Fig. 9 is an illustrative view of a reaction chamber for hydrogen generation with multiple elements consistent with disclosed embodiments.
Fig. 10 is an illustrative view of a reaction chamber for hydrogen generation consistent with disclosed embodiments.
Fig. 11 is an illustrative view of a reaction chamber for hydrogen generation containing multiple channels consistent with disclosed embodiments.
Fig. 12 is an illustrative cross-sectional view of a reaction chamber for hydrogen generation containing expanding channel consistent with disclosed embodiments.
Figs. 13A-13D are illustrative views of a reaction chamber for hydrogen generation containing a serpentine channel consistent with disclosed embodiments.
Fig. 13E is an illustrative view of a flow of a liquid carrier in a reaction chamber for hydrogen generation consistent with disclosed embodiments.
Fig. 14 is an illustrative cross-sectional view of a reaction chamber for hydrogen generation containing a loop channel consistent with disclosed embodiments.
Fig. 15 is an illustrative flowchart of a process of operating a reaction chamber for hydrogen generation containing a loop channel consistent with disclosed embodiments.
Fig. 16 is an illustrative cross-sectional view of a reaction chamber for hydrogen generation in the form of a showerhead consistent with disclosed embodiments.

### DETAILED DESCRIPTION

Reference will now be made in detail to exemplary embodiments, discussed with regards to the accompanying drawings. In some instances, the same reference numbers will be used throughout the drawings and the following description to refer to the same or like parts. Unless otherwise defined, technical and/or scientific terms have the meaning commonly understood by one of ordinary skill in the art. The disclosed embodiments are described in sufficient detail to enable those skilled in the art to practice the disclosed embodiments. It is to be understood that other embodiments may be utilized and that changes may be made without departing from the scope of the disclosed embodiments. Thus, the materials, methods, and examples are illustrative only and are not intended to be necessarily limiting.

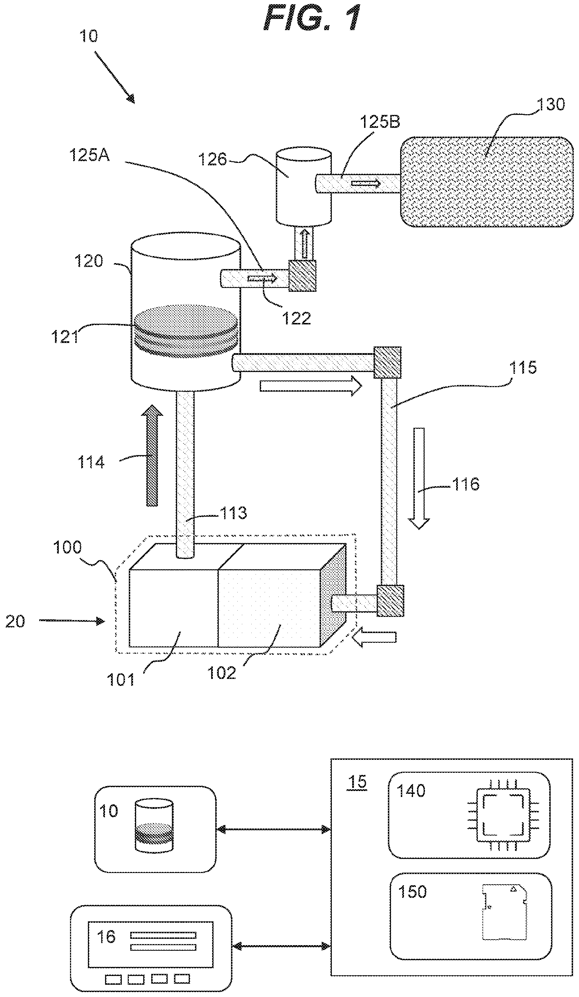

In various embodiments of the present invention, a system for storing a hydrogen liquid carrier and related chemical compounds and/or byproducts is disclosed in connection with a hydrogen generating system 10 for generating hydrogen for powering a fuel cell. In an illustrative embodiment shown in Fig. 1, hydrogen generating system 10 may include a storage system 20 for storing a hydrogen liquid carrier. Storage system 20 may include a carrier tank 100 having several chambers (e.g., chambers 101 and 102), a carrier outlet line 113, (arrow 114 indicates a flow of a hydrogen liquid carrier), a spent carrier inlet line 115 (arrow 116 indicates a flow of a spent carrier), a reaction chamber 120 for producing hydrogen, and a catalyst 121 for facilitating generation of hydrogen from a hydrogen liquid carrier. In an illustrative embodiment shown in Fig. 1, a hydrogen outflow line 125A (arrow 122 indicates the direction of hydrogen flow) delivers hydrogen from reaction chamber 120 to a hydrogen storage chamber 126. Chamber 126 may then deliver hydrogen via a hydrogen line 125B to a fuel cell 130.

In various embodiments, a hydrogen liquid carrier may include metal hydrides, and in some embodiments, metal borohydrides. In an illustrative embodiment, metal borohydrides may include any chemical compound that may be described by formula M¹-BH₄, where M¹ may be a metal selected from a column I of the periodic table of elements, or alloys of metals selected from a column I of the periodic table of elements. In an illustrative embodiment, metal M¹ may include any of Li, Na, K, Rb, Cs, Ca, and Fr. In some embodiments, however, metal M¹ may be selected from column II of the periodic table and may include Mg and Be. Alternatively, M¹ metal may also include Al, Ti, Be, Ca or other suitable metals.

In some embodiments, a hydrogen liquid carrier may include chemical compounds containing more than one metal. In an illustrative embodiment, the hydrogen liquid carrier may include ternary hydrides with a chemical compound described by a formula M^{1a}M^{1b} -H₄, where M^{1a} and M^{1b} may be metals. In an example embodiment, M^{1a} may include Li, Na, K, Rb, Cs, Ti, Be, Fr, or other suitable metals. In an example embodiment, M^{1b} may include Al, Ni, Be, Ca, Ti, or other suitable metals. Additionally or alternatively, the hydrogen liquid carrier may include quaternary hydrides, such as Li-B-H or other suitable quaternary hydrides described by formula M^{1a}-H₄.

The hydrogen liquid carrier may include other chemical compounds other than an aqueous solution of metal hydrides or metal borohydrides. For example, the hydrogen liquid carrier may include solubility-enhancing chemicals or stabilizers, such as soluble metal hydroxides (e.g., sodium hydroxide). Other usable stabilizers may include potassium hydroxide or lithium hydroxide, among others. The liquid component of the hydrogen liquid carrier may include any suitable liquid. Such liquids may include water or alcohols. The liquid carrier may also include additives, stabilizers, or other reaction enhancers, such as sodium hydroxide as a stabilizer, a polyglycol as a surfactant, or many others.

In various embodiments, a hydrogen liquid carrier may also be referred to as a liquid carrier, carrier or a hydrogen-based liquid fuel. As used herein, unless otherwise specified, the term "liquid carrier" or "hydrogen liquid carrier" may refer to a carrier configured to release hydrogen under appropriate temperature and pressure conditions in the proximity of a catalyst. As used herein, unless otherwise specified the term "depleted" when referring to a spent carrier describes the hydrogen liquid carrier after either fully or partially releasing hydrogen. For example, when the carrier is fifty percent depleted, half of all the available hydrogen has been released by the carrier as compared to the maximum amount of hydrogen that can be released by the carrier. In various embodiments, a depleted carrier may also be referred to as a spent carrier. In some embodiments, the spent carrier may include a partially depleted carrier and may contain some hydrogen that can still be released from the carrier.

In various embodiments, a spent carrier is formed during a reaction when hydrogen is released from a hydrogen liquid carrier. In an example embodiment, a reaction may include the reaction of metal borohydrides (described by formula M¹-BH₄) with water leading to M¹-metaborate formation, where M¹ Li, Na, K, Rb, Cs, Ti, Be, Fr, or other suitable metals.

In various embodiments, the chemical reaction between reactants, such as M¹-BH₄ and water may be performed when reactants are dissolved in water. In an illustrative embodiment, an aqueous solution of M¹-BH₄ may be used as a hydrogen liquid carrier, and via chemical reaction, may release hydrogen and form a spent carrier, that may be an aqueous solution of metal borate. While an aqueous solution of metal borate is one example of the spent carrier, the spent carrier may include various other chemical compounds. In an illustrative process, when metal hydrides are used as a hydrogen liquid carrier, the resulting spent carrier may include metals and metaborates.

In various embodiments, a hydrogen liquid carrier releases hydrogen in a reaction chamber 120 when in contact with catalyst 121. In various embodiments, catalyst 121 may include any suitable catalyst for facilitating hydrogen production and may include transition metals, such as Fe, Co, Cu, Ni, Ru, Pt, B, alloys, and combinations thereof. In some embodiments, catalyst 121 may include a Group III metal, Cobalt-P, Cobalt-B, Cobalt-Ni, P and Cobalt-NIB or Electriq Global^{™} E-Switch. In various embodiments, generated hydrogen is delivered via outflow line 125A to hydrogen storage chamber 126 and, subsequently, to fuel cell 130. In various embodiments, system 10 may include pressure sensors and pressure pumps (not shown in Fig. 1) facilitating the flow of a hydrogen liquid carrier, a spent carrier, and flow of hydrogen through lines 113, 115, 125A and 125B. For example, a pump may be used to pump the hydrogen liquid carrier into a pressurized reaction chamber 120. In some embodiments, the hydrogen liquid carrier may flow into reaction chamber 120 as hydrogen is released from reaction chamber 120 and stored in hydrogen chamber 126. In an example embodiment, a pump may be used to transfer hydrogen from chamber 120 to chamber 126.

In various embodiments, system 10 includes controllers that is operated by a computing system 15 schematically shown in Fig. 1. Computing system 15 includes a computer-readable storage medium 150 that can retain and store data and program instructions for execution by a processor 140. Storage medium 150 may include, for example, an electronic storage device, a magnetic storage device, an optical storage device, an electromagnetic storage device, or any suitable combination of such devices or other suitable electronic storage devices. A non-exhaustive list of more specific examples of the computer readable storage medium may include a random access memory (RAM), a read-only memory (ROM), an erasable programmable read-only memory (EPROM or Flash memory), a static random access memory (SRAM) a memory stick, or/and the like.

Program instructions stored on computer-readable storage medium 150 may include assembler instructions, machine dependent instructions, firmware instructions, source code or object code written in any combination of one or more programming languages, including an object oriented programming languages, procedural programming languages or functional programming languages. The programming language may be Fortran, Lisp, C++ or the like. The program instructions may be executed by processor 140 of computing system 15. In some embodiments, the computing system may provide a user interface 16 for modifying data, for updating program instructions or for entering various parameters used by the program instructions.

In various embodiments, processor 140 of computer system 15 is configured to receive a signal (also referred to as indicator) indicating a demand for the hydrogen gas. In response processor 140 controls one or more valves to adjust the rate of flow of the hydrogen liquid carrier to meet the demand for the hydrogen gas. In an illustrative embodiment, the signal indicating the demand for the hydrogen gas is generated by any power consuming system configured to use hydrogen as a source of fuel. For example, for system 10 installed on a vehicle, the signal indicating the demand for hydrogen gas may originate from or may be associated various vehicle systems (e.g., power control processors, accelerator systems, hydrogen combustion control systems, advanced driver assist systems (ADAS), autonomous vehicle control systems, etc.).

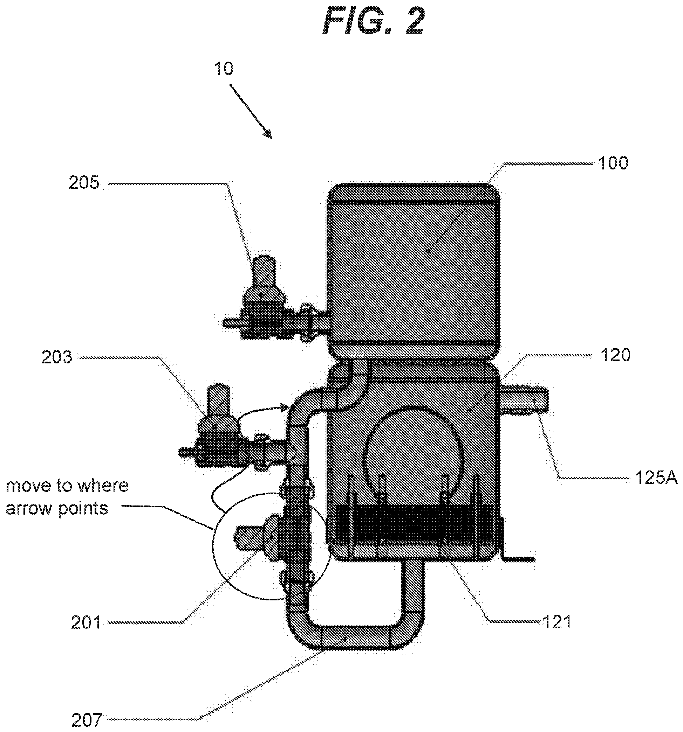

Fig. 2 shows an illustrative embodiment of system 10 including carrier tank 100, reactor chamber 120, hydrogen supply outlet 125A, catalyst 121, as well as a reactor stop valve 201, a main carrier rail 207, a drain valve 203, and a carrier supply valve 205. In various embodiments, carrier supply valve 205 may supply a hydrogen liquid carrier from the external source to carrier tank 100, a drain valve 203 may drain a spent carrier from reactor 120, and reactor stop valve 201 may control the flow of a hydrogen liquid carrier from the carrier tank to reactor 120. In an illustrative embodiment, system 10 depicted in Fig. 2 may produce hydrogen from a hydrogen liquid carrier in discontinuous, periodic cycles. In such an embodiment, main carrier rail 207 is used for supplying a hydrogen liquid carrier from carrier tank 100 to reactor chamber 120 as well as for discharging a spent carrier from reactor chamber 120 via drain valve 203. In an example embodiment, system 10 operates by first flowing the hydrogen liquid carrier via rail 207 from carrier reservoir 100 to reactor chamber 120. There, the hydrogen liquid carrier reacts with catalyst 121 to release hydrogen, which is carried from reactor chamber 120 by hydrogen supply outlet 125A. After completion of a hydrogen production cycle, or at any other suitable time, a spent hydrogen liquid carrier may be collected from reactor chamber 120, flowed through carrier rail 207, and may exit from system 10 via drain valve 203.

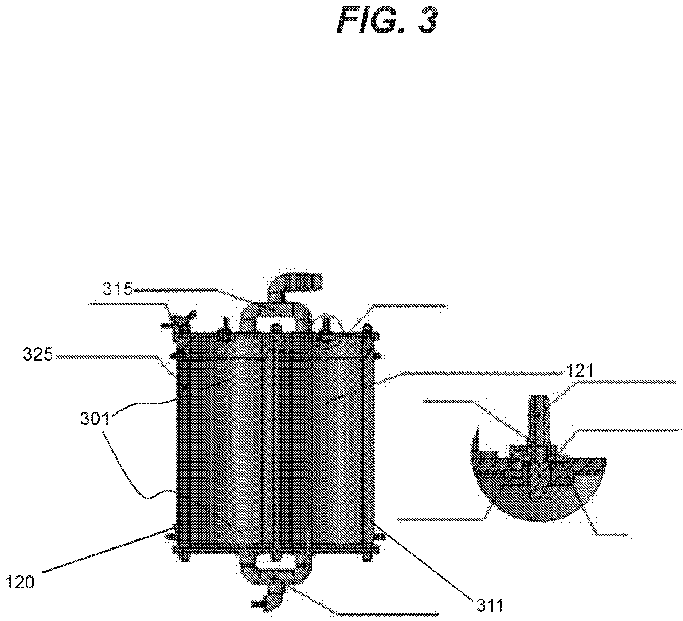

In contrast to the cyclical hydrogen generating system 10 of Fig. 2, the embodiment shown in Fig. 3 may operate to generate hydrogen in a more continuous manner. For example, a hydrogen liquid carrier may be flowed from an upper cylinder head as shown for example by arrows 301 and collected at the bottom of chamber 120 as a spent carrier. In various embodiments, catalyst 121 may be deposited on walls 310 of chamber 120 and may facilitate hydrogen release from the hydrogen liquid carrier as the carrier passes in proximity of walls 310. In various embodiments, hydrogen may be collected at the top of chamber 120 for example at hydrogen manifold 315 for flowing to hydrogen storage chamber 126, or for flowing to a fuel cell 130 (or to any other hydrogen storage or consumption unit).

In various embodiments, chamber 120 may include a liquid cooling system, such as for example a cooling water jacket 325 as shown in Fig. 3. Jacket 325 may be configured to cool walls 310 of reaction chamber 120. The cooling jackets may include a liquid disposed within the jackets. In some embodiments, the cooling jackets may contain a cooling fluid to promote thermal management. The cooling fluid may consist of water, glycol, or some other gas or liquid coolant or combination thereof. The cooling jacket may contain a number of fins or baffles inside the jacket to promote heat transfer. Alternatively, the cooling jackets may include a shell and tube heat exchanger or other known heat transfer device. The cooling jackets may be included within the walls of reaction chamber 120 by various alternative structures.

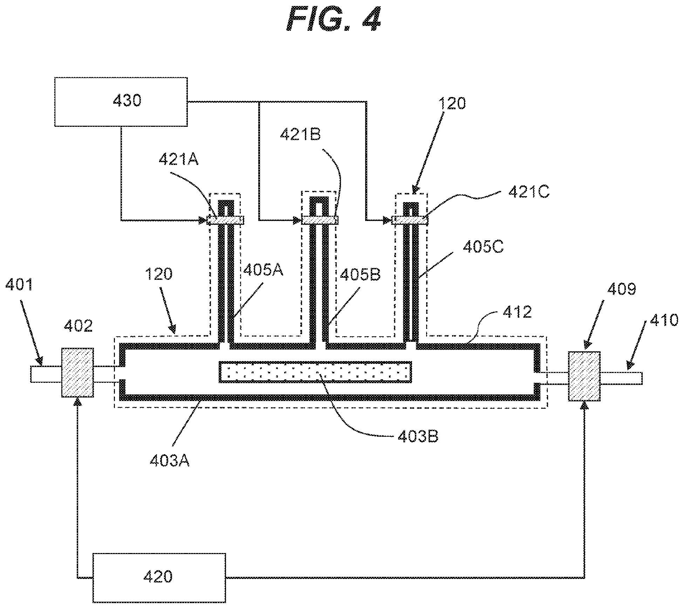

Another embodiment of reaction chamber 120 is shown in Fig. 4. This embodiment includes a channel 412 with an inlet 401 for receiving a hydrogen liquid carrier and an outlet 410 for outputting a spent carrier. The flow rate of the hydrogen liquid carrier is controlled via an inlet valve 402 and an outlet valve 409 by a flow rate controller 420. Reaction chamber 120 includes a catalysts 403A and 403B. In an example embodiment, catalyst 403A may be deposited over at least a portion of a surface of walls 310 of channel 412. Additionally or alternatively, catalyst 403B may be provided within the channel.

In various embodiments, catalyst 403B may be configured to be removable and may be secured to channel 412 by screws, bolts, clamps, clips, locking mechanisms, welding, adhesive or any other means. In an illustrated embodiment, catalyst 403B may include multiple porous sheets positioned within the flow formed by the hydrogen liquid carrier flowing through channel 412. In an illustrative embodiment, catalyst 403B may include porous sheets positioned across the flow, aligned with the flow or arranged at an angle to the flow. In some embodiments, catalyst 403B may include multiple porous sheets with some sheets positioned at a first angle to the flow and some sheets positioned at a second angle to the flow. For example, some sheets may be positioned across the flow, and some sheets may be positioned along the flow.

While the present disclosure provides an example configuration of catalyst 403B, it should be noted that the disclosure is not limited to a particular configuration of catalyst 403B. For example, catalyst 403B may be configured in a substantially planar configuration, cylindrical configuration, as a porous block, as a porous cylinder, or as a two-dimensional or three-dimensional mesh, or in any other suitable configuration. In some embodiments, catalyst 403B may be configured to have various other shapes, for example, to promote a flow of the hydrogen liquid carrier within channel 412, or to maximize a surface wetted area of catalyst 403A or catalyst 403B by the hydrogen liquid carrier. In some embodiments, catalyst 403B may be configured as a corrugated sheet or mesh. In other embodiments, catalyst 403B may be arranged in a structured packing configuration. This may include known structured packing configurations, such as a honeycomb, gauze, knitted, sheet metal, grid or other known structured packing configuration. In other embodiments, catalyst 403B may include a spherical or tubular configuration. In some embodiments, channel 412 of reaction chamber 120 may have multiple regions containing catalyst 403A or catalyst 403B.

In various embodiments, the catalyst material forming catalyst 403A or catalyst 403B may include a metal structure and a catalytic coating on the metal structure. In some embodiments, the coating may include Ni. The coating may be formed as a single layer or may include multiple layers (e.g., layers formed through different processes and/or layers including different materials, etc.). While the present disclosure provides examples of a catalyst with a Ni coating, it should be noted that aspects of the disclosure in their broadest sense, are not limited to any particular composition or structure of catalyst 403A or catalyst 403B.

In some embodiments, the metal structure may be composed of stainless steel. The Ni coating on the metal structure may require a specific roughness value or range of roughness values. In some embodiments, the Ni layer may have a roughness value between the range of 6.3 - 25 µm calculated as the Roughness Average (Ra). While the present disclosure provides examples of exemplary roughness values, it should be noted that aspects of the disclosure in their broadest sense, are not limited to these particular values.

In various embodiments, the flow rate of the hydrogen liquid carrier is determined in view of a hydrogen release rate and a requested or required rate of hydrogen production. For example, in some cases, to achieve a higher rate of hydrogen release from the hydrogen liquid carrier, the flow rate of the hydrogen liquid carrier to a reaction chamber may be increased. In various embodiments, the flow rate of the hydrogen liquid carrier may be calibrated or correlated with the rate of hydrogen release or hydrogen depletion rate. The calibrated or correlation data may be stored in a memory unit (e.g., a computer-readable storage medium 150) as an operational data that can be accessed by a flow controller. In various embodiments, the flow controller may be controlled by computing system 15.

In various embodiments, the flow rate of the hydrogen liquid carrier may affect the extent to which the hydrogen liquid carrier is depleted (e.g., what percentage of the available hydrogen in the hydrogen liquid carrier is released). In some embodiments, any of the length of channel 412, the amount of catalyst 403A and 403B, or the placement of catalyst 403B within channel 412 may affect the amount of depletion of the hydrogen liquid carrier. In some embodiments, channel 412 may be configured to result in the fully depleted or nearly fully depleted hydrogen liquid carrier (e.g., depletion percentages nearing or equaling one hundred percent) in view of a certain flow rate of the hydrogen liquid carrier. In some cases, the design of channel 412 may facilitate complete depletion of the hydrogen liquid carrier even when reaction chamber 120 is operating at a maximum output level within allowed operational parameters.

One or more hydrogen outlets may be located in any suitable location within reaction chamber 120. In some cases, hydrogen outlets 405A-405C may be located along an upper wall portion of channel 412. In an illustrative embodiment, the flow rate of hydrogen from channel 412 may be controlled by a hydrogen flow controller 430 operating valves 421A-421C for hydrogen outlets 405A-405C. In various embodiments, hydrogen flow controller 430 may be operated by computing system 15 of system 10.

In an illustrative embodiment, processor 140 of system 15 receives a signal indicating a demand for the hydrogen gas and adjust a rate of flow of the liquid carrier in the channel using flow rate controller 420 controlling valves 402 and 409, based on the received demand. In various embodiments, processor 140 is configured to receive at least one indicator of the demand for hydrogen gas, and adjust the rate of flow of the hydrogen liquid carrier to meet the demand for hydrogen gas. Additionally, or alternatively, processor 140 may operate hydrogen flow controller 430 to discharge an amount of the hydrogen gas generated in the channel based on the received demand.

The indicator of the demand for hydrogen gas includes signals generated by any system configured to use hydrogen. The signals may be generated by one or more sensors, such as pressure sensors, hydrogen flow rate sensors, or the like. In some embodiments, the amount of the hydrogen gas discharged by hydrogen flow controller 430 may be detected by a sensor, such as a hydrogen pressure sensor, hydrogen flow rate sensor and/or the like. In various embodiments, the pressure sensor may be installed in a region of chamber 120 that contains hydrogen. In various embodiments, the demand for hydrogen gas may correspond to a need for more hydrogen gas, a need for less hydrogen gas, or a need for a maintained level of hydrogen gas supply. Flow rate controller 420 and hydrogen flow controller 430 respond by controlling the valves (e.g. valves 402 and 409 controlled by flow rate controller 420, and valves 421A-421C controlled by hydrogen flow controller 430) to increase, decrease or maintain a supply of hydrogen gas.

In some embodiments, reaction chamber 120 main include channel 412 with several subsections, with each subsection having a subsection outlet for evacuating the hydrogen gas. In some embodiments, a number of subsections may be selected such that the carrier is depleted after passing through all the subsections, resulting in a spent carrier, and wherein the spent carrier is discharged from the reaction chamber 120 via outlet 410. In some embodiments, reaction chamber 120 may include sensors for monitoring hydrogen pressure at various subsection outlets of channel 412.

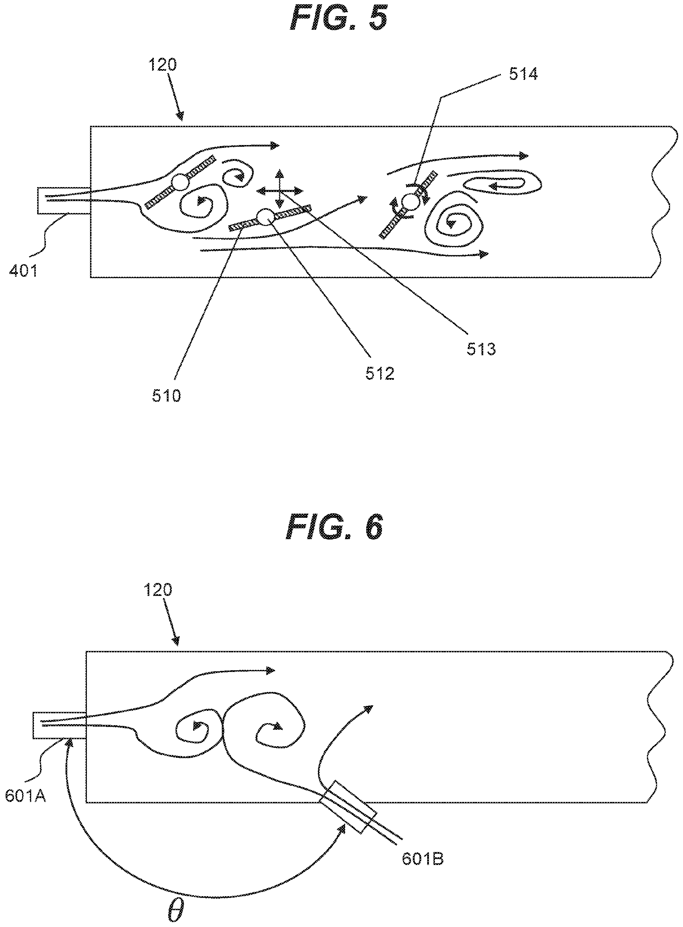

Figs. 5-7 show various embodiments for controlling a flow of a hydrogen liquid carrier within chamber 120 consistent with various aspects of the disclosed embodiments. In an illustrative embodiment shown in Fig. 5, the flow of the hydrogen liquid carrier may enter chamber 120 via inflow inlet 401. In various embodiments, flow control fins 510 may be present within chamber 120. Flow control fins 510 may be configured to move in various directions as schematically illustrated by arrows 513 or may be configured to rotate around central regions 512 as schematically illustrated by arrows 514. Fins 510 may be moved or rotated in any suitable way. In various embodiments, the position and orientation of fins 510 may be controlled by computing system 15. In an illustrative embodiment, fins 510 may be positioned to create vortices within the flow of the hydrogen liquid carrier to enhance carrier mixing and to maximize carrier interaction with catalyst 403A and 403B. In various embodiments, chamber 120 may include one or more fins 510. In some embodiments, catalyst 403B may be deposited over fins 510.

In an illustrative embodiment shown in Fig. 6, chamber 120 may include more than one inlet for entering the hydrogen liquid carrier. For example, as shown in Fig. 6, chamber 120 may include an inlet 601A and an inlet 601B that, in some cases, may be positioned at an angle *θ* relative to inlet 601A, as shown in Fig. 6. In some embodiments, flow controllers may control the flow rate of the hydrogen liquid carrier into inlet 601A and inlet 601B to provide an adequate flow (e.g., the flow rate and the flow mixing) of the hydrogen liquid carrier through chamber 120. Various other configurations of the hydrogen liquid carrier inlets are also possible. For example, chamber 120 may have more than two inlets. Chamber 120 may have a set of inlets that are distributed throughout a portion or entirety of chamber 120, etc.

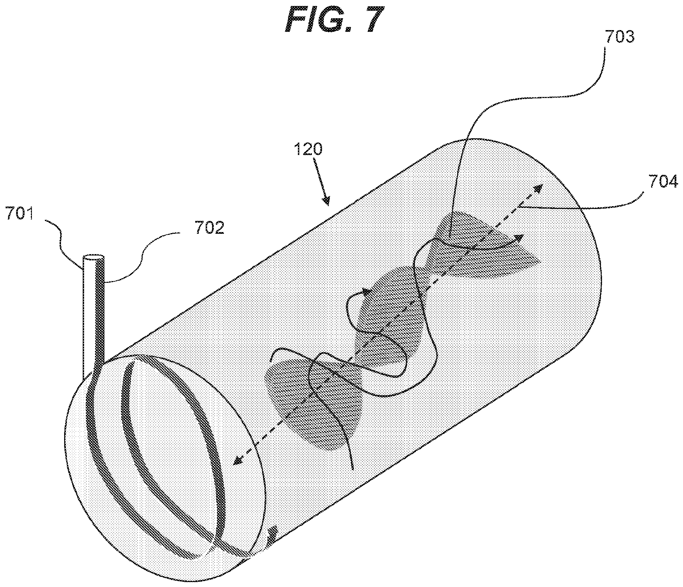

In some configurations, inlets such as 601A and 601B may be parallel, perpendicular or on opposite sides of the reaction chamber relative to one another. Another example of a carrier inlet is shown in Fig. 7. Particularly, inlet 701 may be positioned to deliver hydrogen liquid carrier tangentially relative to walls of chamber 120, as shown in Fig. 7 by streamline 702. In an illustrative embodiment, the hydrogen liquid carrier may have a rotational velocity along the walls of chamber 120. Chamber 120 includes a mixing element 703 placed within chamber 120 configured to enhance mixing of the hydrogen liquid carrier. In an illustrative embodiment, mixing element 703 may be stationary. In some embodiments, mixing component 703 may rotate around axis 704. In some embodiments axis 704 may be aligned with an axis of chamber 120, and in some embodiments, axis 704 may not be aligned with the axis of chamber 120.

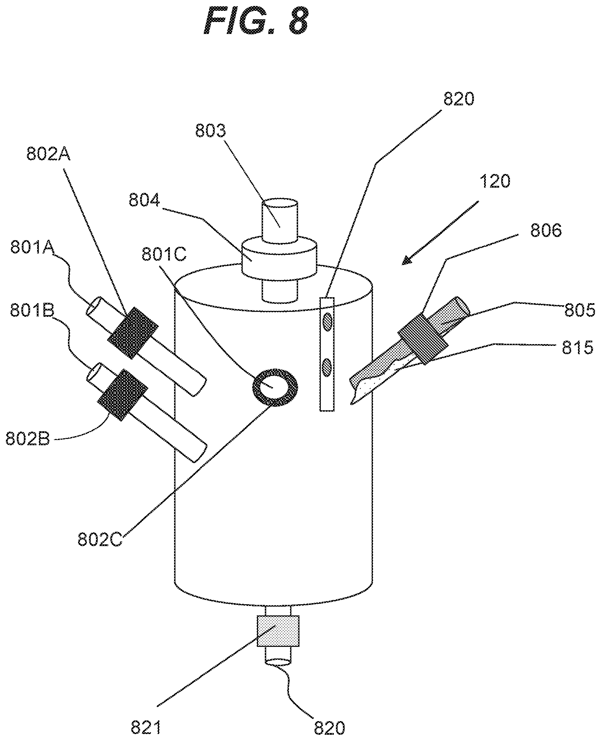

Fig. 8 shows an illustrative embodiment including multiple inlets, such as inlets 801A-801C that may be present in chamber 120. Each of the inlets 801A-801C may be associated with a corresponding flow controller 802A-802C. In various embodiments, each flow controller 802A-802C may separately control the flow of the hydrogen liquid carrier to a corresponding inlet. In various embodiments, chamber 120 may include a hydrogen outlet 803 with respective a hydrogen flow controller 804. Controller 804 may allow hydrogen to be released from chamber 120. In some embodiments, controller 804 enables hydrogen release depending on pressure and temperature within chamber 120, as sensed by sensor 820.

In various embodiments, chamber 120 may include an inlet 805 and a corresponding flow controller 806 for flowing a liquid 815 that may be used to facilitate hydrogen generation within chamber 120. In some embodiments, liquid 815 may include chemical compounds that may be used for forming solutions of the hydrogen liquid carrier. Such chemical compounds may include solubility-enhancing chemicals or stabilizers, such as soluble metal hydroxides, such as LiOH, NaOH, CaOH or KOH or the like. In various embodiments, liquid 815 may include any liquid capable of reacting with a hydrogencontaining chemical compound (e.g., metal borohydride), and may include, but is not limited to, water. The liquid solvent may also include additives, stabilizers, or other reaction enhancers, such as a surfactant, or others. In various embodiments, the mixture of a liquid and hydrogen containing chemical compound may result in a colloid or a suspension. In some embodiments, liquid 815 may include destabilizing agents.

In various embodiments, chamber 120 depicted in Fig 8 may have an outlet 820 and related flow controller 821 for discharging a depleted (spent) carrier from chamber 120. In various embodiments, flow controllers 802A-802C, 804, 806, 808, and 821 may be used to control pressure within chamber 120. In various embodiments, computer system 15 may be used to control various flow controllers shown in Fig. 8.

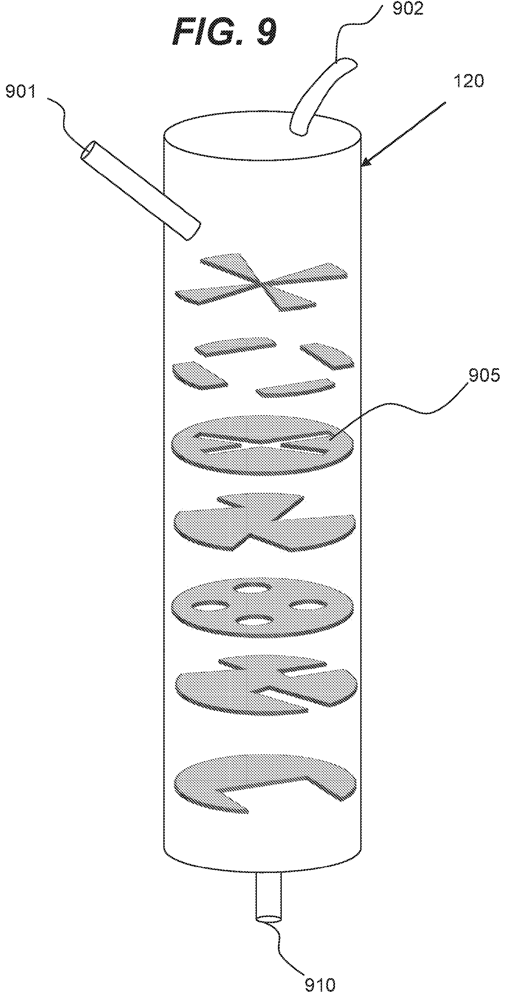

Fig. 9, shows an illustrative embodiment of chamber 120 with an inlet 901, a hydrogen outlet 902, and a spent carrier outlet 910, with chamber 120 including various elements 905 designed to affect the flow within the chamber. In various embodiments, flow elements 905 may include two- and three-dimensional mesh elements, or porous cylinders. In some embodiments, elements 905 may be coated by a catalyst. In various embodiments, the catalyst may include a metal structure (e.g., a support structure) and a catalytic coating on the metal structure. In some embodiments, the coating may include an inner layer including Ni and one or more outer layers including a catalyst material.

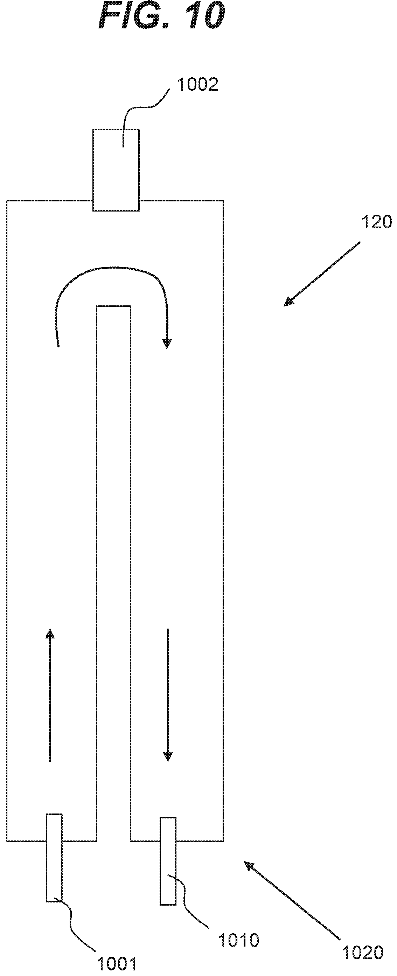

Fig. 10 shows an illustrative embodiment of chamber 120, where inlet 1001 and outlet 1010 are located on the bottom side 1020 of the chamber. The flow of the hydrogen liquid carrier may turn at the top side of chamber 120 resulting in added vortices in the proximity of hydrogen outlet 1002. In various embodiments, chamber 120 may be positioned vertically, such that hydrogen outlet 1002 is in the top portion of chamber 120. The illustrative embodiment of chamber 120 depicted in Fig. 10 may be useful from a design standpoint, as the fluid and gas connections are on different sides of the chamber, which may facilitate mixing within the flow due to flow turning at the top side of chamber 120.

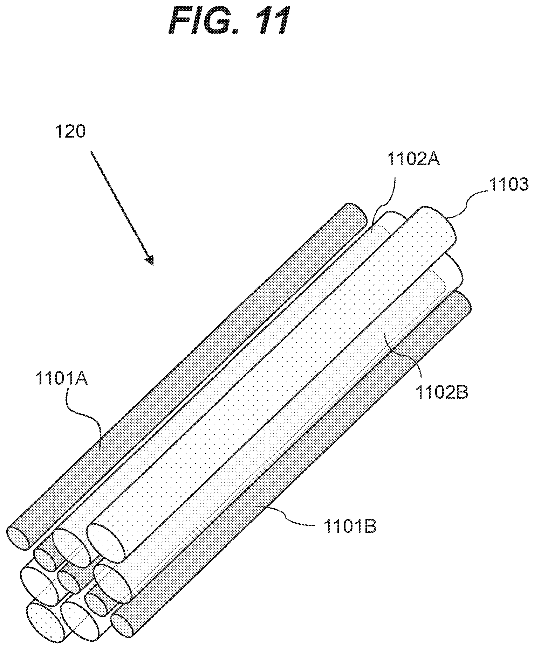

Fig. 11 shows an illustrative design of chamber 120 configured to have multiple channels. In an illustrative embodiment, each channel may have walls covered with a catalyst. In various embodiments, channels may have different cross-sections. As an illustrative example, middle channels, such as channels 1101A and 1101B may have a first cross-section, channels 1102A and 1102B may have a second cross-section different from a first cross-section, and channel 1103 may have a third cross-section different from the first or the second cross-section. In some embodiments, the cross-sections of the channels may be chosen such that the flow at least in the proximity of the outlets of the channels promotes mixing. It should be noted that aspects of the channels discussed above are only illustrative and various other embodiments are possible. For example, channels may all have the same cross-section.

In various embodiments, the presence of multiple channels may allow for additional (finer) control of the flow of the hydrogen liquid carrier. For example, in some embodiments, each channel may have separate flow control. In some embodiments, some channels may be open for flow and some channels may be closed for flow depending on requirements for the rate of hydrogen release. In some embodiments, channels may differ in catalysts present in the channels or may differ in channel wall roughness. In some embodiments, channels may differ in the chemical constituents of the hydrogen liquid carrier intended to flow through the channel. For example, channels 1101A and 1101B may flow aqueous solutions of a hydrogen liquid carrier with a first ratio of solvent-to-solute, while channels 1102A and 1102B may flow aqueous solutions of a hydrogen liquid carrier with a second ratio of solvent-to-solute. In some illustrative embodiments, the hydrogen liquid carriers flowed through channels 1102A and 1102B may be more concentrated than the hydrogen liquid carrier flowed through channels 1101A and 1101B

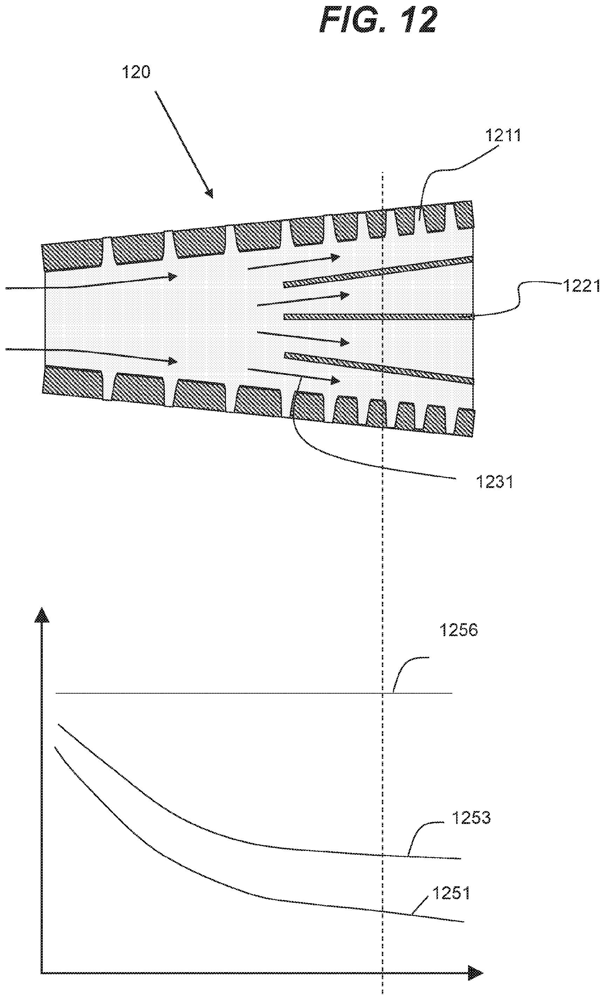

In some embodiments, reaction chamber 120 may include a variable cross-section. In an illustrative embodiment of a cross-section of chamber 120, shown in Fig. 12, chamber 120 may include a gradually expanding profile, which may result in a slowing of the flow of the hydrogen liquid carrier (the flow of the hydrogen liquid carrier is indicated by flow lines 1231). In an illustrative embodiment, the expansion of the volume of chamber 120 may facilitate control of hydrogen release rates from the hydrogen liquid carrier that is partially depleted at the proximity of the exit of chamber 120. In the example embodiment shown in Fig. 12, chamber 120 may include catalytic walls 1221 presented in chamber 120 as shown in Fig. 12. In various embodiments, hydrogen outlet channels 1211 may be present in chamber 120, with the number of hydrogen channels per unit area increasing at the proximity of the exit of chamber 120.

In various embodiments, the carrier depletion may increase towards the end of chamber 120 as shown for example by a curve 1251, which represents hydrogen concentration in a hydrogen liquid carrier over the length of chamber 120. In various embodiments, flow velocity may decrease as shown for example by a curve 1253, which represents a flow velocity of the hydrogen liquid carrier as it traverses the length of chamber 120. In various embodiments, a decrease in the flow rate of the hydrogen liquid carrier and an increase in the wetted catalytic surface due to the presence of catalytic walls 1221 may offset the depletion of the hydrogen liquid carrier resulting in constant or near constant hydrogen release rate over the length profile of chamber 120, as indicated by curve 1256. It should be noted that the hydrogen release rate is not necessarily required to be constant throughout chamber 120 and any other suitable hydrogen release rate may be adequate. In various embodiments, chamber 120 may include multiple hydrogen outlet channels 1221 and may include any number of channels placed at any location of chamber 120.

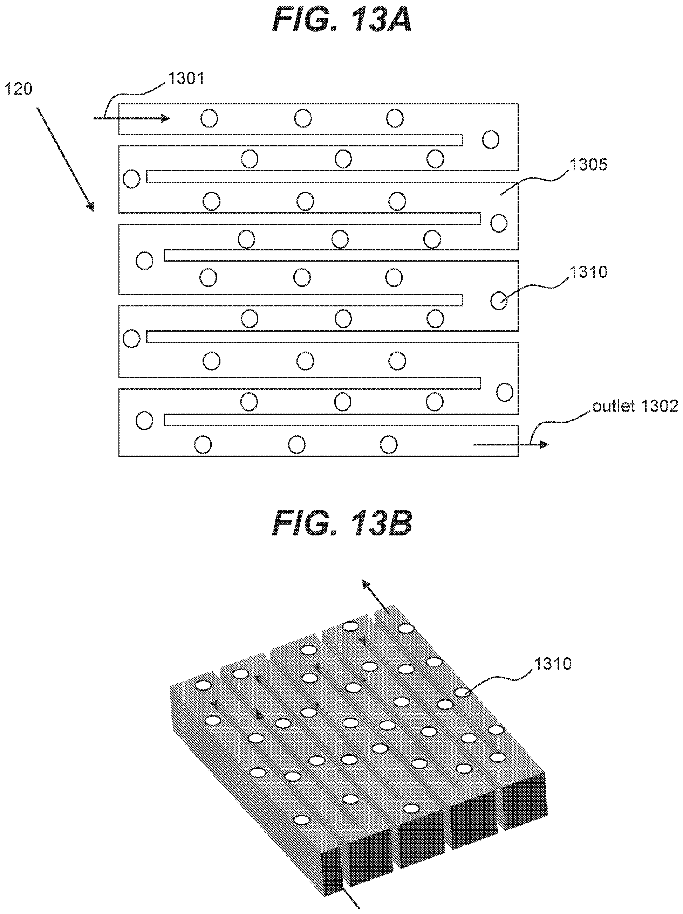

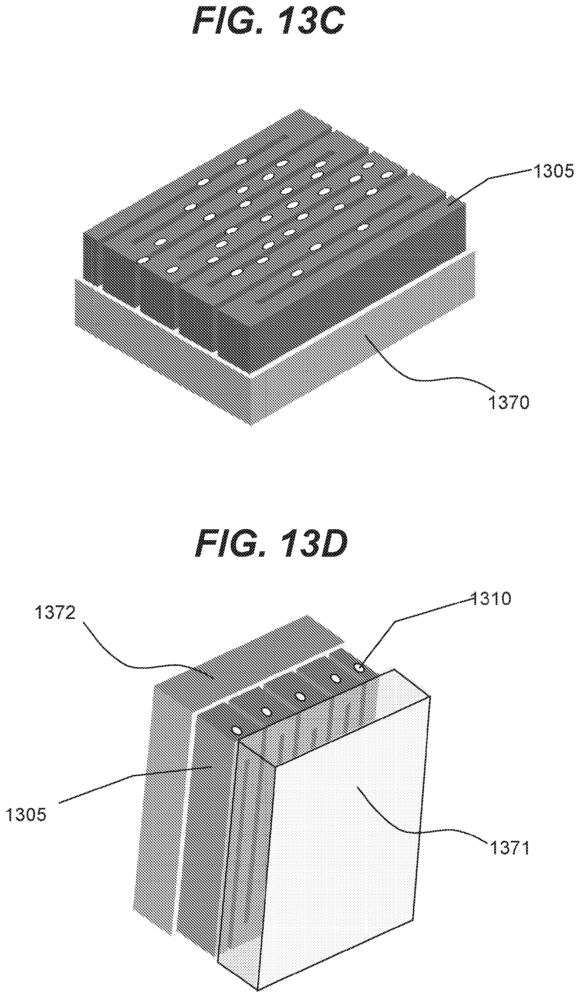

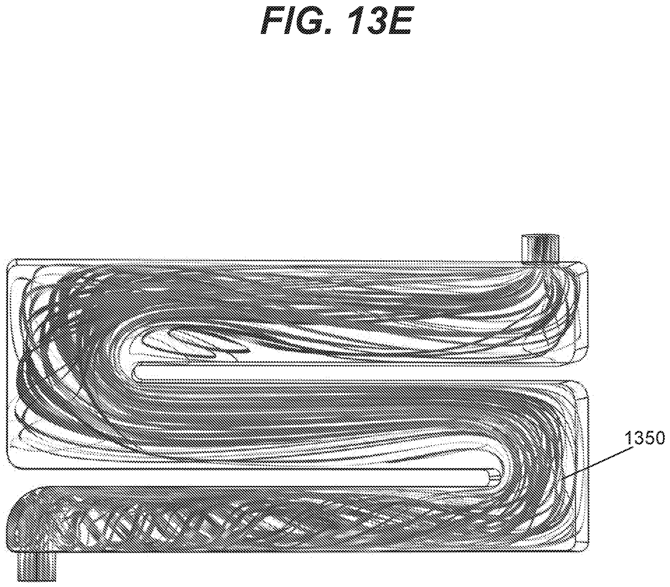

Figs. 13A and 13B show an illustrative embodiment of chamber 120 forming a serpentine channel 1305 and having an inlet 1301 and an outlet 1302. Serpentine channel 1305 may facilitate interaction of the hydrogen liquid carrier with a catalyst that may be deposited on the walls of serpentine channel 1305. In various embodiments, serpentine channel 1305 may result in the flow of the hydrogen liquid carrier progressing through turns that may promote mixing of the carrier. Furthermore, serpentine channel 1305 may be selected to have a large surface area to further promote catalyst interaction with the flow of the carrier. In various embodiments, serpentine channel 1305 may include multiple hydrogen outlets 1310 as shown in Figs. 13A and 13B. Designing chamber 120 as a serpentine channel 1305 may be beneficial for applications where chamber 120 needs to occupy a small volume while maintaining a long chamber. Configuring chamber 120 as a serpentine channel 1305 may be convenient for heat management of the chamber. For example, a heating or cooling module 1370, as shown in Fig. 13C, may be installed in proximity of at least one side of serpentine chamber 1305 for efficient heat management. Fig. 13D shows an embodiment where heat managing units 1372 and 1371 may be installed on opposing sides of serpentine channel 1305 with multiple hydrogen outlets 1310 positioned as shown in Fig. 13D. In various embodiments, serpentine channel 1305 may promote mixing as shown for example by streamlines 1350 in Fig. 13E. Such streamlines may be generated, for example, by computational fluid dynamics simulations for the flow in serpentine chamber 1305.

Fig. 13C shows an example of serpentine chamber 1305 with module 1370. In some embodiments, more than one reaction chamber may be used for hydrogen production from a hydrogen liquid carrier. In an example embodiment, two or more reaction chambers (e.g., a first and a second reaction chamber) with a heating and/or cooling module for each chamber may be used. In an example embodiment, the heating moduli of these chambers may be thermally connected, such that heat from the first reaction chamber may be transferred to the second reaction chamber.

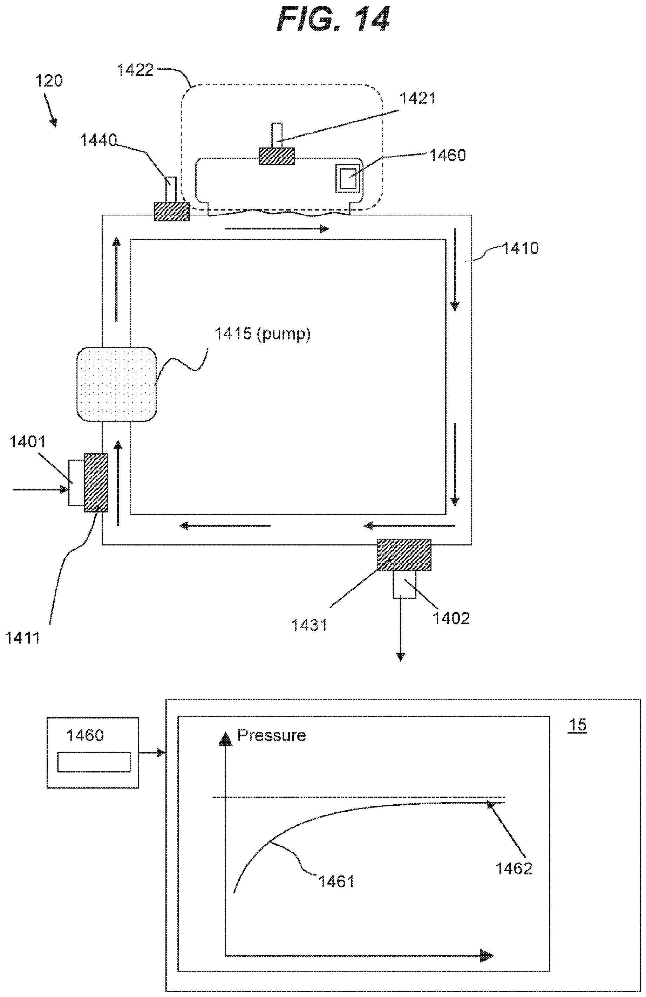

Fig. 14 shows an illustrative embodiment of chamber 120 configured to include a loop channel 1410. In some embodiments, the hydrogen liquid carrier may enter loop channel 1410 via an inlet 1401, with the flow controlled by an inflow valve 1411. In various embodiments, channel 1410 may include a catalyst. In some cases, the catalyst may be deposited over the walls of channel 1410, and in some cases, the catalyst may be present within the channel as an insertable element. Similar to embodiments discussed above, the catalyst unit may be configured to be removable and may be secured to a portion of channel 1410 by screws, bolts, clamps, clips, locking mechanisms, adhesive or any other means. In an illustrated embodiment, the catalyst may include multiple porous sheets positioned within the loop channel 1410. In various embodiments, walls of loop channel 1410 may include roughness elements. In some embodiments, walls may have a roughness value between the range of 6.3 - 25 µm calculated as the roughness average. In some embodiments, walls may be coated by Ni, followed by deposition of a catalyst. In various embodiments, the catalyst may include any suitable catalyst for facilitating hydrogen production and may include transition metals, such as Fe, Co, Cu, Ni, Ru, Pt, alloys, and combinations thereof. While the present disclosure provides examples of exemplary roughness values, it should be noted that aspects of the disclosure in their broadest sense, are not limited to these particular values.

In various embodiments, an inflow of the hydrogen liquid carrier may be facilitated by a pump, as the pressure inside reaction chamber 120 may be higher than the pressure in the inflow valve. In some embodiments, the pressure in reaction chamber 120 may be reduced by releasing hydrogen via a hydrogen outflow 1421. In an illustrative embodiment, shown in Fig. 14, chamber 120 may include a section 1422 for storing hydrogen.

In various embodiments, the hydrogen liquid carrier may circulate within loop channel 1410 through operation of a pump 1415, which may be operated at predetermined intervals and/or for a predetermined amount of time. In an example embodiment, the flow rate of the hydrogen liquid carrier and the time of circulation of the carrier within the chamber may be controlled by computing system 15. In an example embodiment, chamber 120 may include a pressure sensor 1460 that measures pressure (e.g., hydrogen pressure) within a chamber. In an example embodiment, data from pressure sensor 1460 may be transmitted to computing system 15 for evaluating changes in pressure as a function of time, as shown for example by curve 1461. When pressure is substantially unchanged or constant (e.g., region 1462 of curve 1461) no release (or generation) of hydrogen may be observed, which may indicate that the hydrogen liquid carrier may be depleted. The depleted (or spent) hydrogen liquid carrier may be discharged via an outlet 1431 by opening an outflow valve 1402.

In some embodiments, the spent carrier may be discharged from chamber 120, as the hydrogen liquid carrier flows into a chamber. In various embodiments, chamber 120 may also include an inlet 1440 for flowing various chemical compounds or liquids into chamber 120. In some embodiments, inlet 1440 may be configured to flow water. For example, in some embodiments, water may be circulated in channel 1410 for cleaning channel 1410.

In some embodiments, inflow 1401 may allow a concentrated hydrogen liquid carrier to enter loop channel 1410, and water may be added via inflow 1440. During the circulation of the hydrogen liquid carrier within loop channel 1410, the concentrated hydrogen liquid carrier may be mixed with water to provide an aqueous solution of a hydrogen liquid carrier. During a process of discharging a spent carrier, the spent carrier may be released by opening an outflow valve, while, at the same time, adding more water into loop channel 1410 via inflow 1440.

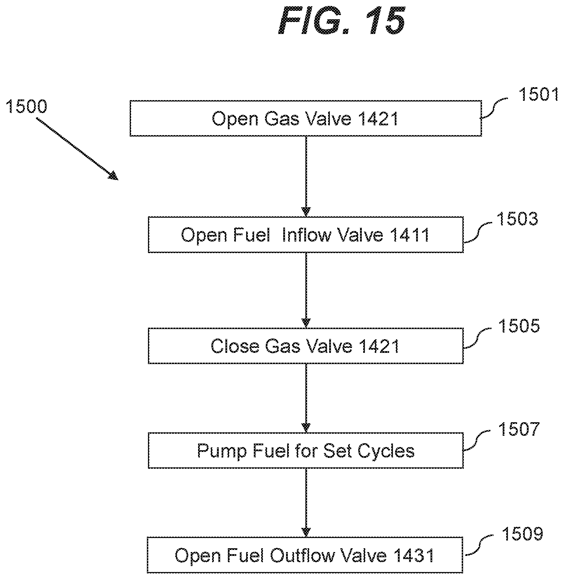

Fig. 15 illustrates a process 1500 for operating loop channel 1410 of chamber 120. At step 1501 of process 1500 hydrogen outflow 1421 may be opened allowing some of the hydrogen to be released from channel 1410; at step 1503 inflow valve 1411 may be opened allowing a hydrogen liquid carrier to enter channel 1410; at step 1505 hydrogen valve 1421 may be closed and inflow valve 1411 may be closed, and pump starts cycling the hydrogen liquid carrier at step 1507. During the carrier cycling, the carrier is depleted releasing hydrogen and increasing pressure inside chamber 120. At step 1509, when the hydrogen liquid carrier is partially or fully depleted (as can be, for example, tested by pressure sensor 1460), valve 1431 may be opened allowing for the spent carrier to exit the channel 1410.

In various embodiments, system 10 may include more than one loop channel 1410 as shown in Fig. 14. For example, system 10 may include a fast and a slow loop channel. The fast loop channel may be similar to loop channel 1410 and may be configured for releasing a large amount of hydrogen quickly. For example, the fast channel may be configured to circulate the hydrogen liquid carrier at a fast rate through the fast loop channel. The fast channel may not be configured to completely deplete the hydrogen liquid carrier, and a partially depleted hydrogen liquid carrier may flow to the slow channel. The slow channel, on the other hand, may be configured to completely deplete the hydrogen liquid carrier by allowing the carrier to release all of its contained hydrogen through a slow circulation process.

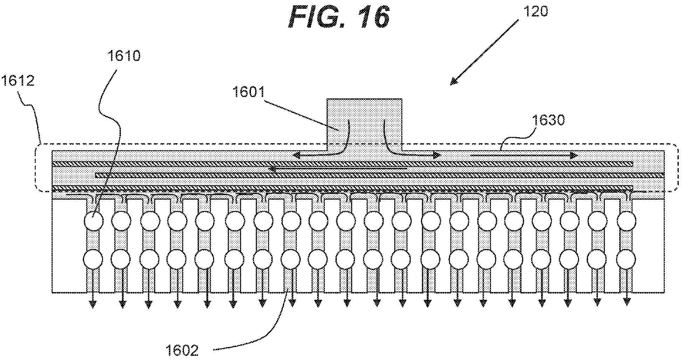

Fig. 16 shows an illustrative embodiment of chamber 120 configured in a form of a showerhead 1630. The hydrogen-based fluid may enter showerhead 1630 via inlet 1601, pass through serpentine section 1612 to reduce variation in flow velocity and pressure due to inflow conditions. After passing serpentine section 1612, the flow may enter a set of outflow channels 1602. Each outflow channel include a catalyst. In an illustrative embodiment the catalyst may be deposited on the walls of channels 1602. In various embodiments, the catalyst may also be presented in the serpentine section 1612. For example, the catalyst may be deposited on the walls forming serpentine section 1602. In various embodiments, outflow channels include hydrogen outlets 1610 for releasing hydrogen from chamber 120

In various embodiments, the design of chamber 120 may include computational simulations to evaluate the efficiency of hydrogen release. For example, during computational simulation, various trajectories of liquid volumes within the flow of the hydrogen liquid carrier may be evaluated. For each trajectory, an effective time that describes the interaction of liquid volume with the catalyst may be estimated.

The foregoing description has been presented for purposes of illustration. It is not exhaustive and is not limited to precise forms or embodiments disclosed. Modifications and adaptations of the embodiments will be apparent from a consideration of the specification and practice of the disclosed embodiments. For example, while certain components have been described as being coupled to one another, such components may be integrated with one another or distributed in any suitable fashion.

Moreover, while illustrative embodiments have been described herein, the scope includes any and all embodiments having equivalent elements, modifications, omissions, combinations (e.g., of aspects across various embodiments), adaptations and/or alterations based on the present disclosure. The elements in the claims are to be interpreted broadly based on the language employed in the claims and not limited to examples described in the present specification or during the prosecution of the application, which examples are to be construed as non-exclusive. Further, the steps of the disclosed methods can be modified in any manner, including reordering steps and/or inserting or deleting steps.

The features and advantages of the disclosure are apparent from the detailed specification, and thus, it is intended that the appended claims cover all systems and methods falling within the scope of the disclosure. As used herein, the indefinite articles "a" and "an" mean "one or more." Similarly, the use of a plural term does not necessarily denote a plurality unless it is unambiguous in the given context. Words such as "and" or "or" mean "and/or" unless specifically directed otherwise. Further, since numerous modifications and variations will readily occur from studying the present disclosure, it is not desired to limit the disclosure to the exact construction and operation illustrated and described, and accordingly, all suitable modifications and equivalents may be resorted to, falling within the scope of the disclosure.

Other embodiments will be apparent from consideration of the specification and practice of the embodiments disclosed herein. It is intended that the specification and examples be considered as an example only, with a scope of the disclosed embodiments being indicated by the following claims.

## Claims

1. A reaction chamber (120) for generating hydrogen gas using a hydrogen liquid carrier line, the reaction chamber comprising:
a channel (412) including a catalyst (403A, 403B) for causing the hydrogen gas to be produced from the hydrogen liquid carrier, the channel including an inlet end (401) for the hydrogen liquid carrier, an outlet end (410) for a spent carrier, and at least one mixing element to enhance mixing of the hydrogen liquid carrier;
a valve (402, 409) for controlling a rate of flow of the hydrogen liquid carrier flowing through the channel;
a gas outlet (405A-405C) for evacuating the hydrogen gas generated in the channel; and
at least one processor (140) configured to receive at least one signal from a power consuming system indicating a demand for the hydrogen gas and to control the valve (402, 409) to adjust the rate of flow of the hydrogen liquid carrier to meet the demand for the hydrogen gas.

2. The reaction chamber of claim 1, wherein the gas outlet is located in an upper wall portion of the channel.

3. The reaction chamber of claim 1, wherein the catalyst is Electriq ^{™} Catalyst.

4. The reaction chamber of claim 1, wherein the catalyst includes at least one of Iron, Nickel, Cobalt, Phosphorus, and Boron.

5. The reaction chamber of claim 1, wherein the catalyst further includes a metal structure with a metalloid catalytic coating, wherein the coating includes multiple layers with at least an inner layer being Ni and an outer layer is the metalloid catalytic coating.

6. The reaction chamber of claim 5, wherein the outer layer includes at least one of a Group III metal, Cobalt-P, Cobalt-B, Cobalt-Ni, P and Cobalt-NIB.

7. The reaction chamber of claim 1, further comprising:
a controller (430) for controlling a release of the hydrogen gas via the gas outlet; and
a sensor for monitoring the hydrogen gas pressure within the channel.

8. The reaction chamber of claim 1, wherein the channel includes several subsections, with each subsection having a subsection outlet for evacuating the hydrogen gas.

9. The reaction chamber of claim 8, wherein a number of subsections is selected such that the hydrogen liquid carrier is depleted after passing through all the subsections, resulting in the spent carrier, and wherein the spent carrier is discharged from the reaction chamber.

10. The reaction chamber of claim 8, further comprising a sensor for monitoring the hydrogen gas pressure at the subsection outlets.

11. The reaction chamber of claim 1, wherein at least a portion of an inner surface of the channel includes a catalytic surface.

12. The reaction chamber of claim 1, wherein the rate of the flow of the hydrogen liquid carrier in the channel is non-uniform.

13. A system for generating hydrogen gas using a borohydride liquid solution, the system comprising the reaction chamber (120) of claim 1, and a hydrogen storage tank (126).

14. The system of claim 13, further comprising a borohydride liquid solution storage and a spent solution storage.

15. The system of claim 13, further comprising a fuel cell system (130) and a rechargeable battery.

## Patentansprüche

1. Reaktionskammer (120) zum Generieren von Wasserstoffgas unter Verwendung einer Wasserstoffflüssigkeitsträgerleitung, wobei die Reaktionskammer Folgendes umfasst:
einen Durchgang (412), der einen Katalysator (403A, 403B) beinhaltet, um zu bewirken, dass das Wasserstoffgas aus dem Wasserstoffflüssigkeitsträger erzeugt wird, wobei der Durchgang ein Einlassende (401) für den Wasserstoffflüssigkeitsträger, ein Auslassende (410) für einen verbrauchten Träger und mindestens ein Mischelement beinhaltet, um das Mischen des Wasserstoffflüssigkeitsträgers zu verbessern;
ein Ventil (402, 409) zum Steuern einer Strömungsrate des Wasserstoffflüssigkeitsträgers, der durch den Durchgang strömt;
einen Gasauslass (405A-405C) zum Ausstoßen des in dem Durchgang generierten Wasserstoffgases; und
mindestens einen Prozessor (140), der dazu konfiguriert ist, mindestens ein Signal von einem Stromverbrauchersystem zu empfangen, das einen Bedarf an Wasserstoffgas angibt, und das Ventil (402, 409) zu steuern, um die Strömungsrate des Wasserstoffflüssigkeitsträgers einzustellen, um den Bedarf an Wasserstoffgas zu decken.

2. Reaktionskammer nach Anspruch 1, wobei sich der Gasauslass in einem oberen Wandabschnitt des Durchgangs befindet.

3. Reaktionskammer nach Anspruch 1, wobei der Katalysator ein Electriq^{™}-Katalysator ist.

4. Reaktionskammer nach Anspruch 1, wobei der Katalysator mindestens eines von Eisen, Nickel, Kobalt, Phosphor und Bor beinhaltet.

5. Reaktionskammer nach Anspruch 1, wobei der Katalysator ferner eine Metallstruktur mit einer katalytischen Metalloidbeschichtung beinhaltet, wobei die Beschichtung mehrere Schichten beinhaltet, wobei mindestens eine innere Schicht Ni ist und eine äußere Schicht die katalytische Metalloidbeschichtung ist.

6. Reaktionskammer nach Anspruch 5, wobei die äußere Schicht mindestens eines von einem Metall der Gruppe III, Kobalt-P, Kobalt-B, Kobalt-Ni, P und Kobalt-NIB beinhaltet.

7. Reaktionskammer nach Anspruch 1, ferner umfassend:
eine Steuerung (430) zum Steuern einer Freisetzung des Wasserstoffgases über den Gasauslass; und
einen Sensor zum Überwachen des Wasserstoffgasdrucks innerhalb des Durchgangs.

8. Reaktionskammer nach Anspruch 1, wobei der Durchgang mehrere Unterabschnitte beinhaltet, wobei jeder Unterabschnitt einen Unterabschnittsauslass zum Ausstoßen des Wasserstoffgases aufweist.

9. Reaktionskammer nach Anspruch 8, wobei eine Anzahl von Unterabschnitten so ausgewählt ist, dass der Wasserstoffflüssigkeitsträger nach Durchlaufen aller Unterabschnitte erschöpft ist, was zu dem verbrauchten Träger führt, und wobei der verbrauchte Träger aus der Reaktionskammer abgegeben wird.

10. Reaktionskammer nach Anspruch 8, ferner umfassend einen Sensor zum Überwachen des Wasserstoffgasdrucks an den Unterabschnittsauslässen.

11. Reaktionskammer nach Anspruch 1, wobei mindestens ein Abschnitt einer inneren Oberfläche des Durchgangs eine katalytische Oberfläche beinhaltet.

12. Reaktionskammer nach Anspruch 1, wobei die Strömungsgeschwindigkeit des Wasserstoffflüssigkeitsträgers in dem Durchgang ungleichmäßig ist.

13. System zum Generieren von Wasserstoffgas unter Verwendung einer flüssigen Borhydridlösung, wobei das System die Reaktionskammer (120) nach Anspruch 1 und einen Wasserstoffspeichertank (126) umfasst.

14. System nach Anspruch 13, ferner umfassend einen Speicher für flüssige Borhydridlösung und einen Speicher für verbrauchte Lösung.

15. System nach Anspruch 13, ferner umfassend ein Brennstoffzellensystem (130) und eine wiederaufladbare Batterie.

## Revendications

1. Chambre de réaction (120) destinée à générer de l'hydrogène gazeux à l'aide d'une ligne de support d'hydrogène liquide, la chambre de réaction comprenant :
un canal (412) comprenant un catalyseur (403A, 403B) destiné à provoquer la production de l'hydrogène gazeux à partir du support d'hydrogène liquide, le canal comprenant une extrémité d'entrée (401) destinée au support d'hydrogène liquide, une extrémité de sortie (410) destinée à un support usé, et au moins un élément de mélange destiné à améliorer le mélange du support d'hydrogène liquide ;
une soupape (402, 409) pour commander un débit d'écoulement du support d'hydrogène liquide s'écoulant à travers le canal ;
une sortie de gaz (405A-405C) destinée à évacuer l'hydrogène gazeux généré dans le canal ; et
au moins un processeur (140) configuré pour recevoir au moins un signal à partir d'un système consommateur d'énergie indiquant une demande pour l'hydrogène gazeux et pour commander à la soupape (402, 409) d'ajuster le débit du support d'hydrogène liquide pour répondre à la demande pour l'hydrogène gazeux.

2. Chambre de réaction de la revendication 1, dans laquelle la sortie de gaz est située dans une partie de paroi supérieure du canal.

3. Chambre de réaction de la revendication 1, dans laquelle le catalyseur est un catalyseur Electriq^{™}.

4. Chambre de réaction de la revendication 1, dans laquelle le catalyseur comprend au moins l'un parmi le fer, le nickel, le cobalt, le phosphore et le bore.

5. Chambre de réaction de la revendication 1, dans laquelle le catalyseur comprend en outre une structure métallique avec un revêtement catalytique métalloïde, dans laquelle le revêtement comprend de multiples couches, au moins une couche interne étant du Ni, et une couche externe est le revêtement catalytique métalloïde.

6. Chambre de réaction de la revendication 5, dans laquelle la couche externe comprend au moins l'un d'un métal du groupe III, du cobalt-P, du cobalt-B, du cobalt-Ni, du P et du cobalt-NIB.

7. Chambre de réaction de la revendication 1, comprenant en outre :
un dispositif de commande (430) destiné à commander une libération de l'hydrogène gazeux par l'intermédiaire de la sortie de gaz ; et
un capteur destiné à surveiller la pression d'hydrogène gazeux à l'intérieur du canal.

8. Chambre de réaction de la revendication 1, dans laquelle le canal comprend plusieurs sous-sections, chaque sous-section présentant une sortie de sous-section pour évacuer l'hydrogène gazeux.

9. Chambre de réaction de la revendication 8, dans laquelle un certain nombre de sous-sections est sélectionné de sorte que le support d'hydrogène liquide est appauvri après être passé à travers toutes les sous-sections, donnant lieu au support épuisé, et dans laquelle le support épuisé est déchargé à partir de la chambre de réaction.

10. Chambre de réaction de la revendication 8, comprenant en outre un capteur destiné à surveiller la pression d'hydrogène gazeux au niveau des sorties de sous-section.

11. Chambre de réaction de la revendication 1, dans laquelle au moins une partie d'une surface intérieure du canal comprend une surface catalytique.

12. Chambre de réaction de la revendication 1, dans laquelle le débit de l'écoulement du support d'hydrogène liquide dans le canal est non uniforme.

13. Système destiné à générer de l'hydrogène gazeux à l'aide d'une solution liquide de borohydrure, le système comprenant la chambre de réaction (120) de la revendication 1, et un réservoir de stockage d'hydrogène (126).

14. Système de la revendication 13, comprenant en outre un stockage de solution liquide de borohydrure et un stockage de solution usée.

15. Système de la revendication 13, comprenant en outre un système de pile à combustible (130) et une batterie rechargeable.
